# EUROPÄISCHE PATENTSCHRIFT

(11) **EP 0 611 408 B1**
(45) Veröffentlichungstag und Bekanntmachung des Hinweises auf die Patenterteilung: **25.09.1996**
(21) Anmeldenummer: 93912785.8
(22) Anmeldetag: 25.05.1993
(51) Int. Cl.: E04F 15/02, B29C 43/00

(54) **KORKBELAG, INSBESONDERE KORKBODENBELAG**
CORK COVERING, IN PARTICULAR FLOOR CORK COVERING
REVETEMENT EN LIEGE, NOTAMMENT POUR PLANCHERS

(30) Priorität: 26.05.1992 DE 4217438; 21.10.1992 DE 4235530
(43) Veröffentlichungstag der Anmeldung: 24.08.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9301311
(87) Internationale Veröffentlichungsnummer: WO9324719

(56) Entgegenhaltungen:
- EP-A- 0 355 686
- DE-A- 3 715 646
- DE-C- 862 367
- GB-A- 1 323 862
- GB-A- 1 426 872
- GB-A- 2 020 227
- GB-A- 2 113 607
- US-A- 4 104 103
- US-A- 4 431 697

## Beschreibung

Die Erfindung betrifft einen Korkbelag, insbesondere einen Korkbodenbelag, mit einer durch eine Korkschicht gebildeten Oberschicht und mit einer mit der Oberschicht verbundenen Trägerschicht.

Korkbeläge, insbesondere Korkbodenbeläge, sind als Korkplatten bekannt. Die Korkplatten bestehen aus gepreßten Korkstücken. Sie sind jedoch leicht zerbrechlich. Der Schneid- und der Verlegungsvorgang sind besonders schwierig. Außerdem sind sie teuer. Darüber hinaus müssen solche aus Korkplatten bestehenden Bodenbeläge nach der Verlegung versiegelt werden, damit die Oberfläche abriebfeste Eigenschaften erhält.

Diese Probleme wurden auch schon bei anderen Anwendungen erkannt. Aus der GB-A-2 020 227 ist eine dünne, extrem flexible Korkplatte bekannt, die eine Konsistenz ähnlich Leder oder einem Textilstoff aufweist. Die dort gezeigte und beschriebene mindestens zweischichtige Korkplatte besteht aus einer Bahn aus geschälten Kork, auf die eine Kunststoffbahn als Ober- und Deckschicht aufgeklebt oder mittels Druck und Temperatureinfluß fest verbunden ist. Auf der Unterseite kann eine Trägerschicht aus dem gleichen Kunststoffmaterial angeordnet sein. Dadurch kann das dünne Korkmaterial ähnlich einem Textilstoff oder Leder geschnitten und eingesetzt werden und z.B. zu Taschen, Säcken, Portemonnaies od.dgl. verarbeitet werden.

Sowohl die Oberschicht, als auch die gegebenenfalls vorhandene Trägerschicht bestehen aus einer Bahn eines Kunststoffmaterials, wobei zumindest die Oberschicht in der Regel durchsichtig ist, damit die Korkstruktur sichtbar ist.

Daneben ist als Korkbodenbelag Korkparkett bekannt. Je nach gewünschter Oberflächentextur wird Korkparkett aus Korkschrot unterschiedlicher Körnungen hergestellt. Korkparkett kann einschichtig sein oder aus mehreren miteinander verbundenen Schichten bestehen. Dabei wird auf eine Trägerschicht aus "normalem" Korkparkett eine dekorative Schicht aufgeleimt. Die dekorative Schicht ist meistens 1 mm stark und kann dementsprechend nicht nach der Verlegung feingeschliffen werden und muß somit mit lösungsmittelhaltigen Siegellacken behandelt werden, wodurch solche Korkparkette wenig umweltfreunlich sind und auch gesundheitsschädliche Stoffe ausscheiden können. Die Herstellung von einschichtigen, massiven Korkbelägen ist relativ aufwendig, da der Naturstoff Kork, der zu Platten mit Abmessungen, die enge Toleranzen aufweisen zusammengefügt werden soll, nur nach mehreren Verfahrensschritten diese Maßgenauigkeiten aufweisen kann. Darüberhinaus sind solche Beläge nicht für hohe Beanspruchungen geeignet.

Als korkhaltiges Produkt kann das sog. Linoleum angesehen werden, bei dem zu Korkmehl vermahlener Kork mit Leinöl durch aufwendige Oxidierung gebunden wird. Der Prozeß verläuft diskontinuierlich. Es wird ein hartes, eine relativ hohe Steifigkeit aufweisendes Produkt erhalten, das vorzugsweise als Bodenbelag verwendet wird. Die Verlegung eines derartigen Bodenbelages ist relativ kompliziert, da die Kanten der Bahnen geschweißt werden müssen.

Aufgabe der vorliegenden Erfindung ist es, einen Korkbelag, insbesondere einen Korkbodenbelag anzugeben, der die o.g. Nachteile nicht aufweist und darüberhinaus elastisch, abfallarm bei der Verlegung, pflegeleicht, preisgünstig und haltbar ist. Das Verfahren zur Herstellung eines sochen Belages soll einfach durchführbar sein.

Diese Aufgabe wird durch den im Anspruch 1 angegebenen Korkbelag gelöst. Das Verfahren zur Herstellung eines solchen Bodenbelages ist in den Ansprüchen 12 und 13 angegeben. Unteransprüche stellen vorteilhafte Weiterbildungen dar.

Der erfindungsgemäße Korkbelag weist eine aus mindestens einer Lage stückigen Korkmaterials bestehende Korkschicht auf, die nach Verlegung des Korkbelages die sichtbare Oberschicht bildet und die mit einer im verlegten Zustand nicht sichtbaren Trägerschicht verbunden ist. Bei einem Fußbodenbelag ist die Oberschicht auch begehbar. Die Trägerschicht ist gebildet durch durch Druck- und Temperatureinfluß verdichtetes und miteinander verbundenes stückiges thermoplastisches Kunststoffolienmaterial. Die Oberschicht und die Trägerschicht sind miteinander fest verbunden. Da die Trägerschicht aus miteinander mindestens teilweise verbundenen Stücken aus Kunststoffolienmaterial besteht, wobei die Verbindung des Kunststoffmaterials bei einem guten Zusammenhalt noch so locker sein kann, daß Lufteinschlüsse und auch kleine Lunker in dem verdichteten Material vorhanden sind, wird sie besonders trittelastisch. Wird eine Schicht aus Korkmaterial mit einer derartigen Trägerschicht verbunden, so entsteht ein Korkbelag, der mehrere günstige Eigenschaften aufweist. Die Korkschicht ist durch die den Korkstücken innewohnende Elastizität elastisch. Diese Elastizität des Korkmaterials wird durch die erfindungsgemäße Verwendung in dem angegebenen Korkbelag nicht vernichtet, sondern gut ausgenutzt. Dadurch ist der erfindungsgemäße Korkbelag sowohl abriebfest als auch trittelastisch und recht gut schalldämmend. Die Trittelastizität und die Schalldämmung gehören zu den wesentlichen Eigenschaften des erfindungsgemäßen Korkbodenbelages. Außerdem weist der erfindungsgemäße Korkbelag auch bei Nässe eine hohe Dimensionsstabilität auf. Durch die feste Verbindung des Korkmaterials mit dem folienartigen Kunststoffmaterial ist ein derartiger Korkbelag im Gegensatz zu Pressholz auch wasserfest und feuchtigkeitsunempfindlich.

In einer besonders vorteilhaften Ausgestaltung sieht die Erfindung vor, daß der aus Korkmaterial bestehenden Oberschicht Bindemittel zugegeben werden. Besteht die Oberschicht aus in Form von einzelnen Korkkörnern vorliegendem Korkmaterial, so bewirkt die Zugabe des Bindemittels neben der Bindung der einzelnen Korkkörner mit der Trägerschicht die Verbindung der Korkkörner untereinander. Die zwischen den einzelnen Korkkörnern befindlichen Hohlräume werden durch das Bindemittel ganz oder teilweise ausgefüllt. Außerdem schützt das Bindemittel die einzelnen Korkkörner gegen das Aufbrechen aus der oberflächennahen Schicht. Darüberhinaus kann ein derartiger Korkbelag durch das Bindemittel versiegelt und gleichzeitig abriebfester gemacht werden. Dadurch erübrigt sich eine Versiegelung nach Verlegung.

Gemäß einer vorteilhaften Ausführungsform werden den Stücken aus thermoplastischem Kunststoffmaterial, die die Trägerschicht bilden, auch andere, nicht thermoplastische Materialien beigemischt. Insbesondere wenn die Elastizität und die schalldämmenden Eigenschaften des Korkbelages noch weiter erhöht werden sollen, können dem Kunststoffmaterial Schaumstoffstücke oder auch textile Materialien, vorteilhafterweise in Form von Stücken oder Fäden zugegeben werden. Durch die Zugabe dieser Materialien wird die Trägerschicht lockerer und dadurch trittelastischer und schalldämmender.

In einer vorteilhaften Ausführungsform der Erfindung ist vorgesehen, daß die Kunststoffolienstücke aus Polyolefinfolien stammen. Insbesondere sind Polyethylenfolien geeignet. Die Stücke aus Polyethylenfolien sind einfach handhabbar und die Verbindung der einzelnen Stücke durch Druck- und Temperatureinfluß, wobei die Temperatur im Bereich der Erweichungstemperatur des Kunststoffes liegt, ist besonders gut. Außerdem, da das stückige Kunststoffolienmaterial vorteilhafterweise aus Abfallfolien stammt und die meisten Kunststoffolien Polyethylenfolien sind, sind sie besonders preisgünstig.

Es ist vorteilhaft, wenn die Trägerschicht über ihren Querschnitt eine Gradientenstruktur aufweist, d.h. wenn sich der Verdichtungsgrad des Kunststoffolienmaterials über den Querschnitt kontinuierlich ändert. Nimmt die Dichte in Richtung der Oberschicht / Korkschicht zu, so weist der erfindungsgemäße Korkbelag gute trittelastische Eigenschaften auf und ist schalldämmender als derartige, eine konstante Dichte aufweisende Bodenbeläge.

Der Korkschicht können auch andere Stoffe zugegeben werden, insbesondere zu Musterzwecken, z.B. Stücke aus Kunststoff. Dies ist dann sinnvoll, wenn die Verbindung zwischen den Korkstücken bzw. den Korkkörnern und den zugegebenen Kunststoffstücken ohne weiteres möglich ist. Durch die Wahl eines geeigneten Bindemittels kann eine solche Verbindung vereinfacht werden.

Gemäß einer anderen Ausführungsform ist vorgesehen, daß die Trägerschicht und die Korkschicht besonders dünn sind und daß ein derartiger Korkbelag warmverformbar ist. Die Erfindung sieht auch vor, daß die aus stückigem Korkmaterial bestehende Korkschicht z.B.aus einer dünnen Lage von Korkkörnern besteht. Diese Ausgestaltung ist insbesondere für Anwendungen des Korkbelages als Wand- oder Möbelverkleidung vorteilhaft. Ein derartiger Korkbelag kann unter Ausnutzung thermoplastischer Flächenverformung auf die zu beschichtenden Gegenstände z.B. warm aufgebügelt werden.

Die Oberschicht des erfindungsgemäßen Korkbelages kann auch mit einer prägeähnlichen Verformung versehen werden. Durch den Aufbau der Oberschicht aus einzelnen Korkkörner entsteht ohnehin eine Tal-Berg-Struktur, die dem Korkbelag ein optisch ansprechendes Aussehen verleiht. Die Täler zwischen den einzelnen Körnern können aber auch mit Bindemittel ausgefüllt werden, auch mit farbigem Bindemittel, wodurch eine neue Musterung entsteht.

Das Verfahren zur Herstellung des erfindungsgemäßen Korkbelages wird so durchgeführt, daß mehrere Lagen stückigen Kunststoffolienmaterials zu einer Schicht aufgeschüttet werden, diese Schicht unter Druck- und Temperatureinfluß vorverdichtet wird, auf diese Schicht eine aus mindestens zwei Lagen stückigen Korkmaterials bestehende Korkschicht abgelegt wird und die beiden Schichten unter Druck- und Temperatureinfluß miteinander verbunden werden, wobei die Kunststoffolienschicht unter Bildung einer Trägerschicht gleichzeitig verdichtet wird und die Kunststoffolienstücke untereinander verbunden werden. Es ist vorteilhaft, wenn auf die vorverdichtete Kunststoffolienstückeschicht eine thermisch bindende Bindemasse oder Pulver aufgegeben wird, damit die Korkschicht und die Trägerschicht fester miteinander verbunden werden.

In einer anaeren Ausführungsform des Verfahrens ist vorgesehen, daß der Korkschicht noch zusätzlich Bindemittel zugegeben werden. Die Zugabe von Bindemitteln ist allgemein notwendig, wenn die Korkschicht aus mehreren Lagen einzelner Korkkörner besteht. Als besonders geeignet hat sich als Bindemittel ionomeres Copolymerisat von Ethylen und Acrylsäure herausgestellt. Das Bindemittel kann der Korkschicht als Pulver, Masse, Dispersion oder Lösung zugegeben werden. Das Bindemittel wird mit dem stückigen Korkmaterial vermischt und zur Korkschicht auf die Kunststoffmaterialschicht aufgelegt. Durch Temperatureinwirkung wird das als Pulver oder Masse vorliegende Bindemittel klebrig, bis es unter Druck fließt und sowohl die zwischen den einzelnen Korkkörnern als auch die zwischen den Korkkörnern und dem Kunststoffmaterial befindlichen Hohlräume gut ausfüllen kann. Während des Abkühlprozesses des Belages erstarrt das flüssige Bindemittel zu einer festen und abriebfesten Masse.

In Abwandlung kann das Verfahren so durchgeführt werden, daß die Korkmaterialschicht auf das aufgeschichtete, jedoch noch nicht verdichtete Kunststoffmaterial abgelegt wird und die beiden Schichten durch Druck- und Temperatureinfluß miteinander verbunden werden, wobei gleichzeitig die schicht aus stückigen Kunststoffolien verdichtet wird und die Kunststoffolienstücke mindestens teilweise untereinander verbunden werden.

Die Gradientenstruktur der Dichte der Trägerschicht über ihren Querschnitt wird durch variable Druck- und Temperatureinwirkung erreicht. Die Temperatur- und Druckwerte nehmen in Richtung der abnehmenden Dichte des Kunststoffmaterials ab. Vorteilhaft ist, wenn die Dichte der Trägerschicht zur Oberschicht hin zunimmt.

Durch die Verwendung von schuppenartigen Folienstücken ist der Herstellungsvorgang des erfindungsgemäßen Korkbelages einfach und sehr variabel. Die Folienstücke lassen sich zur beliebigen Dichte und Mischung dosieren. Eine Aufschichtung des Kunststoffmaterials in einzelnen Lagen ist nicht notwendig, das Material wird vielmehr zu einer erforderlichen Schichthöhe aufgerieselt. Eine besondere Variationsmöglichkeit ergibt sich bei Verwendung von räumlich ausgebildeten Folienstücken. Die Höhe des aufgeschichteten bzw. des aufgerieselten Materials kann sogar über die Fläche des herzustellenden Belages unterschiedlich sein. Die Stellen, die mehr Material aufweisen, werden durch den Preß- bzw. Walzvorgang höher verdichtet als die Stellen mit weniger Material. Auf diese Weise entstehen unterschiedlich verdichtete Flächenbereiche.

Der gesamte Herstellungsvorgang des erfindungsgemäßen Korkbelages ist einfach und erfordert keine aufwendigen und komplizierten Maschinen. Die Verbindung der Oberschicht mit der Trägerschicht und die Verbindung der einzelnen Bestandteile der Oberschicht untereinander, sowie das gezielte Verdichten der Trägerschicht bzw. Versehen derselben mit einer Dichte-Gradientenstruktur kann beliebig in mehreren Arbeitsgängen oder in einem Arbeitsgang erfolgen. Es sind keine hohen Temperatur- und Druckwerte erforderlich, die Erweichungstemperatur des verwendeten Kunststoffes (z.B. 110 -125°C bei Niederdruck PE) ist ausreichend, um die einzelnen Stücke miteinander zu verbinden.

Die untere Seite eines derartigen Korkbodenbelages kann zusätzlich mit einem Glasfaservlies, einem Polyestergewebe oder einer Glasfaserlage versehen werden. Diese Schicht erleichtert das Verbinden des Korkbelages mit der Unterlage und trägt auch zusätzlich zur Dimensionsstabilität bei.

Der erfindungsgemäße Korkbelag kann auch in Fliesenform, z.B. 50 x 50 cm, mit unterschiedlich dicken Trägerschichten hergestellt werden. Ein besonderer Vorteil der Erfindung ist, daß die Oberschicht des Fußbodenbelages bereits während ihrer Herstellung mit einer abriebfesten und festigkeitserhöhenden Schicht versehen werden kann. Dadurch entfällt eine nachträgliche, nach der Verlegung des Fußbodenbelages notwendige Beschichtung bzw. Versiegelung desselben.

Ein Ausführungsbeispiel der Erfindung wird anhand der nachfolgenden Figur näher erläutert. Es zeigt:
Fig. 1: Eine schematische Darstellung eines Schnittes durch den erfindungsgemäßen Korkbelag mit einer durch einzelne Korkkörner gebildeten Oberschicht.
Fig. 2: Eine schematische Darstellung eines Schnittes durch den erfindungsgemäßen Korkbelag mit einer dünnen Oberschicht.

Der Korkbelag 1 weist eine aus mehreren Lagen stückigen, insbesondere körnigen Korkmaterials bestehende Korkschicht 2 und eine Trägerschicht 3 auf. Die Korkschicht 2 besteht aus einzelnen Korkkörnern 4, die untereinander durch ein Bindemittel 5 verbunden sind. Die Korkkörner 4 sind außerdem durch das Bindemittel 5 mit der Trägerschicht 3 verbunden. Das Bindemittel 5 bindet jedes einzelne Korkkorn 4 und füllt die zwischen den im wesentlichen runden Korkkörner 4 bestehenden Hohlräume 6 aus. Außerdem bildet das Bindemittel 5 eine Oberflächenschicht 7, welche dem Korkbelag 1 die notwendige Abriebfestigkeit verleiht. Dadurch entfällt die Versiegelung des Korkbelages nach seiner Verlegung z.B. als Fußbodenbelag. Die Trägerschicht 3 besteht aus stückigem Kunststoffolienmaterial, wobei die einzelnen Kunststoffolienstücke 8 miteinander durch Druck- und Temperatureinfluß verbunden sind. Der Zusammenhalt der einzelnen Kunststoffolienstücke 8 untereinander ist so gut, daß der Korkbelag einen festen Zusammhalt aufweist. Die Kunststoffolienstücke 8 bilden jedoch keine homogene Schicht. Zwischen den einzelnen Kunststoffolienstücken 8 sind Lufteinschlüsse bzw. Lunker 9 vorhanden.

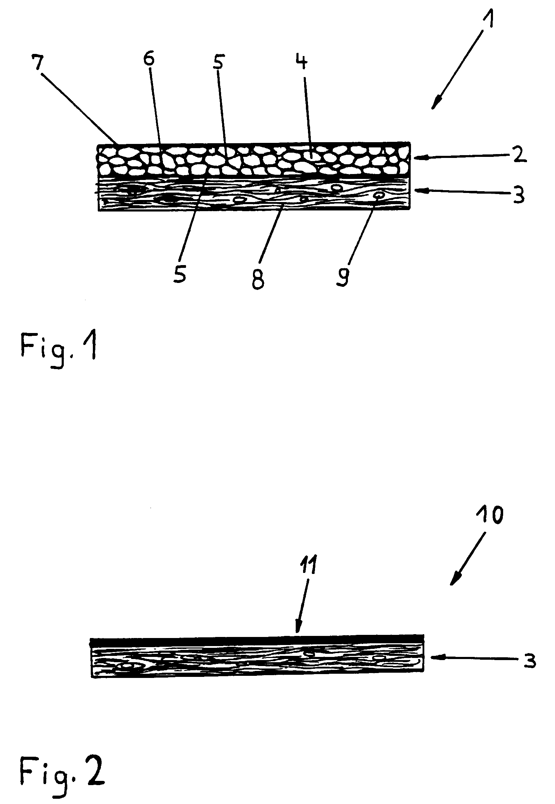

In Fig. 2 ist ein Korkbelag 10 dargestellt, bei dem die Oberschicht durch eine dünne Schicht aus Korkkörnern 11 gebildet ist. Die Festigkeit einer derartigen Verbindung ist z.B. bei Polyolefinfolien, insbesondere Polyethylenfolien ausreichend. Es kann auch ein Zusatz von einer thermoklebenden Schicht vorgesehen werden, wenn die Festigkeit der Verbindung z.B. aufgrund der nicht ausreichenden Klebeeigenschaften des erwärmten Kunststoffes nicht ausreichend ist.

## Patentansprüche

1. Korkbelag (1,10), insbesondere Korkbodenbelag, mit einer durch mindestens eine Lage stückigen Korkmaterials (4) gebildeten Korkschicht (2,11) als Oberschicht und mit einer Trägerschicht (3), die mit der Oberschicht (2,11) fest verbunden und aus durch Druck und Temperatureinfluß verdichtetem und miteinander verbundenem stückigen thermoplastischen Kunststoffolienmaterial (8) besteht.

2. Korkbelag nach Anspruch 1, **dadurch gekennzeichnet,** daß das stückige Korkmaterial (2) Korkkörner (4) sind.

3. Korkbelag nach Anspruch 1 oder 2, **dadurch gekennzeichnet,** daß die Korkschicht durch eine dünne Lage (11) aus stückigem Korkmaterial, insbesondere Korkkörnern, gebildet ist.

4. Korkbelag nach Anspruch 1 oder 2, **dadurch gekennzeichnet,** daß das stückige Kunststoffolienmaterial (8) aus Polyolefinfolien, insbesondere Polyethylenabfallfolien, stammt.

5. Korkbelag nach einem der vorangegangenen Ansprüche, **dadurch gekennzeichnet,** daß dem Kunststoffmaterial (8) andere, nicht thermoplastische Materialien beigemischt sind.

6. Korkbelag nach einem der vorangegangenen Ansprüche, **dadurch gekennzeichnet,** daß die Trägerschicht (3) über ihren Querschnitt unterschiedliche Verdichtungsgrade aufweist.

7. Korkbelag nach Anspruch 4, **dadurch gekennzeichnet,** daß die Dichteänderung kontinuierlich ist.

8. Korkbelag nach einem der vorangegangenen Ansprüche, **dadurch gekennzeichnet,** daß die Trägerschicht (3) Lagen von Glasfaser oder Glasfaservlies aufweist.

9. Korkbelag nach einem der vorangegangenen Ansprüche, **dadurch gekennzeichnet,** daß die Trägerschicht (3) Lufteinschlüsse oder Lunker (9) aufweist.

10. Korkbelag nach einem der vorangegangenen Ansprüche, **dadurch gekennzeichnet,** daß er dünn ausgebildet und warm plastisch ist.

11. Korkbelag nach einem der vorangegangenen Ansprüche, **dadurch gekennzeichnet,** daß der Korkschicht (2) andere Stoffe zugegeben sind.

12. Verfahren zur Herstellung eines Korkbelages nach einem der vorangegangenen Ansprüche, **dadurch gekennzeichnet,** daß thermoplastisches stückiges Kunststoffolienmaterial (8) in mehreren Lagen zu einer Schicht aufgeschüttet wird, auf diese Schicht eine aus mindestens einer Lage stückigen Korkmaterials (4) bestehende Korkschicht (2,11) abgelegt wird und die beiden Schichten durch Druck- und Temperatureinfluß miteinander verbunden werden, wobei die Kunststoffolienstücke (8) unter Bildung einer Trägerschicht (3) verdichtet und mindestens teilweise untereinander verbunden werden.

13. Verfahren zur Herstellung eines Korkbelages nach einem der Ansprüche 1 bis 11, **dadurch gekennzeichnet,** daß thermoplastisches stückiges Kunststoffolienmaterial (8) in mehreren Lagen zu einer Schicht aufgeschüttet und durch Druck- und Temperatureinfluß zu einer Trägerschicht (3) verdichtet, wobei die Stücke mindestens teilweise miteinander verbunden werden, und daß anschließend auf diese Trägerschicht (3) eine aus mindestens einer Lage stückigen Korkmaterials bestehende Korkschicht (2,11) abgelegt wird und die beiden Schichten durch Druck- und Temperatureinfluß miteinander verbunden werden, wobei die Trägerschicht (3) endverdichtet wird.

14. Verfahren nach einem der Ansprüche 12 oder 13, **dadurch gekennzeichnet,** daß die Temperatur im Bereich der Erweichungstemperatur der verwendeten Kunststoffe liegt.

15. Verfahren nach einem der Ansprüche 12 bis 14, **dadurch gekennzeichnet,** daß auf die aufgeschüttete Schicht (3) aus Kunststoffolienmaterial (8) eine Thermoklebeschicht vor der Verbindung mit der Korkschicht (2,1 1 ) aufgegeben wird.

16. Verfahren nach einem der Ansprüche 12 bis 15, **dadurch gekennzeichnet,** daß die Druck- und Temperatureinwirkung kontinuierlich durch eine Kalanderwalze aufgebracht wird.

17. Verfahren nach einem der Ansprüche 12 bis 16, **dadurch gekennzeichnet,** daß die Kunststoffolienstücke (8) vor der Verdichtung räumlich ausgebildet sind.

18. Verfahren nach einem der Ansprüche 12 bis 17, **dadurch gekennzeichnet,** daß die Kunststoffolienstücke (8) vor der Verdichtung schuppenartige Ausbildung aufweisen.

19. Verfahren nach einem der Ansprüche 12 bis 18, **dadurch gekennzeichnet,** daß den Kunststoffolienstücken (8) andere Materialien, insbesondere Stücke oder Fäden aus textilen Stoffen beigemischt werden.

20. Verfahren nach einem der Ansprüche 12 bis 19, **dadurch gekennzeichnet,** daß der aus Korkkörnern (4) bestehenden Korkschicht (2) ein Bindemittel (5) zugegeben wird.

## Claims

1. Cork covering (1, 10), in particular cork floor covering, with a cork layer (2, 11) formed by at least one stratum of discrete cork material (4) as an upper layer and with a supporting layer (3) which is firmly bonded to the upper layer (2, 11) and comprises pieces of thermoplastic synthetic resin sheet material (8) compressed and bonded together by the action of pressure and temperature.

2. Cork covering according to claim 1, **characterised in that** the discrete cork material (2) is in the form of cork granules (4).

3. Cork covering according to claim 1 or 2, **characterised in that** the cork layer is formed by a thin stratum (11) of discrete cork material, in particular cork granules.

4. Cork covering according to claim 1 or 2, **characterised in that** the pieces of synthetic resin sheet material (8) originate from polyolefin sheets, in particular polyethylene scrap sheets.

5. Cork covering according to one of the foregoing claims, **characterised in that** the synthetic resin material (8) has other, non-thermoplastic, materials added in with it.

6. Cork covering according to one of the foregoing claims, **characterised in that** the supporting layer (3) has different degrees of density over its cross-section.

7. Cork covering according to claim 4, **characterised in that** the alteration in density is continuous.

8. Cork covering according to one of the foregoing claims, **characterised in that** the supporting layer (3) has strata of glass fibre or glass fibre felt.

9. Cork covering according to one of the foregoing claims, **characterised in that** the supporting layer (3) has air pockets or cavities (9).

10. Cork covering according to one of the foregoing claims, **characterised in that** it is made thin and deformable with heat.

11. Cork covering according to one of the foregoing claims, characterised in that other materials are added to the cork layer (2).

12. Method of manufacturing a cork covering according to one of the foregoing claims, **characterised in that** thermoplastic pieces of synthetic resin sheet material (8) are poured in several strata to form a layer, a cork layer (2, 11) comprising at least one stratum of discrete cork material (4) is deposited on this layer, and the two layers are bonded together by the action of pressure and heat, the synthetic resin sheet pieces (8) being compressed to form a supporting layer (3) and at least partially bonded together.

13. Method of manufacturing a cork covering according to one of claims 1 to 11, **characterised in that** pieces of thermoplastic synthetic resin sheet material (8) are deposited in a number of strata to form a layer and compressed by the action of pressure and heat to form a supporting layer (3), the pieces becoming at least partially bonded together, and that subsequently a cork layer (2, 11) comprising at least one stratum of discrete cork material is deposited on this supporting layer (3) and the two layers are connected together by the application of pressure and heat, whereby the supporting layer (3) is finally compressed.

14. Method according to one of claims 12 or 13, **characterised in that** the temperature lies in the range of the softening temperature of the synthetic resins employed.

15. Method according to one of claims 12 to 14, **characterised in that** a thermo-adhesive layer is applied to the deposited layer (3) of synthetic resin sheet material (8) before the bonding to the cork layer (2, 11).

16. Method according to one of claims 12 to 15, **characterised in that** the action of pressure and heat is applied continuously by means of a calender roll.

17. Method according to one of claims 12 to 16, **characterised in that** the pieces (8) of synthetic resin sheet are shaped spatially before the compression.

18. Method according to one of claims 12 to 17, **characterised in that** the pieces (8) of synthetic resin sheet are of flake-like form before the compression.

19. Method according to one of claims 12 to 18, **characterised in that** the pieces (8) of synthetic resin sheet have other materials, in particular pieces or threads of textile materials, mixed in with them.

20. Method according to one of claims 12 to 19, **characterised in that** a binding medium (5) is added to the cork layer (2) made up of cork granules (4).

## Revendications

1. Revêtement en liège (1, 10), en particulier revêtement de sol en liège, avec, comme couche supérieure, une couche de liège (2, 11) formée par au moins une couche de matériau à base de morceaux de liège (4) et avec une couche de support (3) qui est solidaire de la couche supérieure (2, 11) et qui consiste en un matériau (8) à base de morceaux de film en matière thermoplastique compacté et assemblé sous l'effet de la pression et de la température.

2. Revêtement en liège suivant la revendication 1, caractérisé par le fait que le matériau à base de morceaux de liège est des grains de liège (4).

3. Revêtement en liège suivant la revendication 1 ou 2, caractérisé par le fait que la couche de liège est formée par une mince couche (11) de matériau à base de morceaux de liège, en particulier des grains de liège.

4. Revêtement en liège suivant la revendication 1 ou 2, caractérisé par le fait que le matériau (8) à base de morceaux de film en matière plastique provient de films de polyoléfine, en particulier de déchêts de films de polyéthylène.

5. Revêtement en liège suivant l'une des revendications précédentes, caractérisé par le fait qu'à la matière plastique (8) sont mélangées d'autres matières non thermoplastiques.

6. Revêtement en liège suivant l'une des revendications précédentes, caractérisé par le fait que la couche de support (3) présente, sur sa section, différents degrés de compactage.

7. Revêtement en liège suivant la revendication 4, caractérisé par le fait que la variation de densité est continue.

8. Revêtement en liège suivant l'une des revendications précédentes, caractérisé par le fait que la couche de support (3) présente des couches de fibre de verre ou de voile en fibre de verre.

9. Revêtement en liège suivant l'une des revendications précédentes, caractérisé par le fait que la couche de support (3) présente des inclusions d'air ou des retassures (9).

10. Revêtement en liège suivant l'une des revendications précédentes, caractérisé par le fait qu'il se présente de forme mince et plastique à chaud.

11. Revêtement en liège suivant l'une des revendications précédentes, caractérisé par le fait qu'à la couche de liège (2) sont ajoutées d'autres matières.

12. Procédé de fabrication d'un revêtement en liège suivant l'une des revendications précédentes, caractérisé par le fait que du matériau (8) à base de morceaux de film en matière thermoplastique en plusieurs couches est entassé en une seule couche, que sur cette couche est déposée une couche de liège (2, 11) composée d'au moins une couche de matériau à base de morceaux de liège (4) et que les deux couches sont assemblées l'une à l'autre sous l'effet de la pression et de la température, les morceaux de films en matière plastique (8) étant compactés et assemblés au moins partiellement les uns aux autres, en formant une couche de support (3),

13. Procédé de fabrication d'un revêtement en liège suivant l'une des revendications 1 à 11, caractérisé par le fait que du matériau (8) à base de morceaux de film en matière thermoplastique en plusieurs couches est entassé en une seule couche et compacté, sous l'effet de la pression et de la température, en une couche de support (3), les morceaux étant assemblés au moins partiellement les uns aux autres, et qu'il est ensuite déposé, sur cette couche de support (3), une couche de liège (2, 11) composée d'au moins une couche de matériau à base de morceaux de liège et que les deux couches sont assemblées l'une à l'autre sous l'effet de la pression et de la température, la couche de support (3) étant compactée définitivement.

14. Procédé suivant l'une des revendications 12 ou 13, caractérisé par le fait que la température est de l'ordre de la température de ramollissement des matières plastiques utilisées.

15. Procédé suivant l'une des revendications 12 à 14, caractérisé par le fait que sur la couche entassée (3) de matériau (8) à base de films en matière plastique est appliquée, avant l'assemblage avec la couche de liège (2, 11), une couche thermo-adhésive.

16. Procédé suivant l'une des revendications 12 à 15, caractérisé par le fait que l'effet de la pression et de la température est appliqué en continu par un cylindre de calandre.

17. Procédé suivant l'une des revendications 12 à 16, caractérisé par le fait que les morceaux de film en matière plastique (8) sont développés dans l'espace avant le compactage.

18. Procédé suivant l'une des revendications 12 à 17, caractérisé par le fait que les morceaux de film en matière plastique (8) présentent, avant le compactage, un développement en forme d'écailles.

19. Procédé suivant l'une des revendications 12 à 18, caractérisé par le fait qu'aux morceaux de film en matière plastique (8) sont mélangés d'autres matériaux, en particulier des morceaux ou des fils d'étoffes textiles.

20. Procédé suivant l'une des revendications 12 à 19, caractérisé par le fait qu'à la couche de liège (2) composée de grains de liège (4) est ajouté un liant (5).
